# EUROPÄISCHE PATENTSCHRIFT

(11) **EP 0 383 066 B1**
(45) Veröffentlichungstag und Bekanntmachung des Hinweises auf die Patenterteilung: **14.06.1995**
(21) Anmeldenummer: 90101382.1
(22) Anmeldetag: 24.01.1990
(51) Int. Cl.: F16L 55/10, F15B 13/01, B22D 11/20

(54) **Rohrbruchsicherungsventil**
Conduit rupture protection valve
Valve de sécurité contre la rupture de conduite

(30) Priorität: 13.02.1989 DE 3904208
(43) Veröffentlichungstag der Anmeldung: 22.08.1990
(73) Patentinhaber: SMS SCHLOEMANN-SIEMAG AKTIENGESELLSCHAFT, 40237 Düsseldorf (DE)
(72) Erfinder: Hild, Berthold, D-5909 Burbach-Wahlbach (DE); Watzlaw, Meinhard, D-4019 Monheim 2 (DE)
(74) Vertreter: Müller, Gerd, Dipl.-Ing.

(56) Entgegenhaltungen:
- EP-A- 0 023 591
- EP-A- 0 025 852
- WO-A-88/06694
- GB-A- 2 197 433

## Beschreibung

Die Erfindung betrifft ein Sicherungsventil gegen Leckagen oder Druckabfall in Druckleitungen oder in mit Druck beaufschlagten Bauelementen von Hydrauliksystemen, insbesondere Rohrbruchsicherungsventil für hydraulisch wirkende, die Stütz- und Führungselemente wie Führungsrollen, Treibrollen oder deren Rollensegmente von im Strangguß hergestellten Metallbrammen, Metallbändern oder Metallprofilen abstützende oder anstellende Kolben-Zylinder-Einheiten, wobei das Sicherungsventil mit einem auf wenigstens zwei unterschiedliche Betriebsdrücke selbst umschaltenden Sicherungssystem ausgerüstet ist.

An Rohrbruchsicherungsventile von in Hüttenwerken an Brammen-Stranggießanlagen installierten Hydrauliksystemen sind besondere Anforderungen zu stellen. So werden die Führungselemente der Strangführung mit Hilfe von Hydraulikzylindern gegen Distanzstücke in Position gehalten. Zur Sicherstellung der Strangführung müssen die Hydraulikzylinder ihre angefahrene Position beibehalten. Deswegen werden im Falle einer Leckage mit Druckabfall, z.B. Schlauch- oder Rohrbruch im Hydrauliksystem gegenwärtig Rohrbruchsicherungen mit einem definierten Ansprechdruck verwendet. Diese schließen den betreffenden Zylinderanschluß gegen die außen liegende Leckage ab und halten den erforderlichen Mindestdruck in der Zylinderkammer aufrecht.

Die besonderen Bedingungen des Stranggusses machen es erforderlich, daß der auf die Hydraulikzylinder der Führungselemente aufzubringende hydraulische Druck auf zwei Betriebsarten bezogen werden muß.

Aus der EP-A-00 23 591 ist eine hydraulische Steuerung mit Rohrbruchsicherung für einen doppelt beaufschlagbaren Antriebszylinder zum Positionieren, insbesondere einer angetriebenen Führungsrolle in der Strangführung einer Stranggießanlage bekannt. Die Rohrbruchsicherung besteht aus zwei Baueinheiten, nämlich einem Sperrventil und einem Vorsteuerventil, wobei das Sperrventil in der Hauptsteuerleitung angeordnet ist und mit Hilfe des Vorsteuerventils auf unterschiedliche Betriebsdrücke einstellbar ist. Der Kolben des Sperrventils steht in einer "Quasi-Schließstellung", was bedeutet, daß der Sperrkolben in der Hauptsteuerleitung bei einem Abfall des hydraulischen Druckes die Hauptsteuerleitung sperrt, im Betrieb jedoch das hydraulische Atmen des Zylinders für die Führungsrolle zuläßt. Das Vorsteuerventil ist mit Hilfe eines federbelasteten Schiebers derart aufgebaut, daß das Sperrventil im Normalbetrieb den Rohrbruch in Schließstellung erwartet.

In der EP-A-0 025 852 ist eine hydraulische Steuerung für die Anstellzylinder der Stütz- und Führungselemente in einer Stranggießanlage beschrieben. Das hierzu dargestellte hydraulische Steuerungssystem verwendet Elektromagnetventile mit mechanischer Betätigung mittels einer Feder bei entregtem Elektromagnet. Die Funktionssicherheit der hydraulisch betriebenen Anstellzylinder und damit die Funktionssicherheit des hydraulischen Steuersystems sollen gemäß diesem Stand der Technik dahingehend verbessert werden, daß, falls die gesamte Elektrik ausfällt, eine Notversorgung über einen längeren Zeitraum aufrechterhalten wird und der hydraulische Druck im System gehalten wird. Um dies zu erreichen, wird in das hydraulische Steuerungssystem ein zusätzliches Vier/Zwei-Wege-Vorsteuerventil eingebaut, ferner ein erstes entsperrbares Rückschlagventil, ein zweites entsperrbares Rückschlagventil sowie ein drittes entsperrbares Rückschlagventil. Von einer Hochdruckquelle führt eine Hochdruckleitung über ein Absperrventil zu einem gegen eine Federkraft elektrisch betätigbaren Wegeventil. Die Wegeventile sind zur Vermeidung von internen Ölverlusten als leckölfreie Sitzventile ausgeführt und erlauben eine Betriebsweise mit geregeltem Druck über ein Druckregelventil. Dieses hydraulische Steuerungssystem mit Elektromagnetventilen mit mechanischer Betätigung ist aufwendig und im harten Walzwerksbetrieb anfällig.

In der GB-A-2 197 433 ist ein Sicherungsventil gezeigt, welches in der hydraulischen Druckleitung zu einer doppelt beaufschlagbaren Kolben-Zylinder-Einheit angeordnet ist. Das Ventil weist einen Steuerkolben auf, der mit einem federnd nachführbaren Kolbensitz zusammenwirkt. Dieser hat keine Schaltfunktion und ist nicht hydraulisch beaufschlagt. Soll der Druck im Zylinder der Einheit erhöht werden, um dessen Kolben und Kolbenstange nach oben zu bewegen, so wird Hydraulikflüssigkeit unter erhöhtem Druck durch eine Leitung und durch eine Eingangsbohrung in den Hohlraum des Steuerkolbens geleitet. Infolge des höheren Drucks öffnet sich der Kolbensitz und das hydraulische Druckmedium kann in den Zylinderraum der Einheit fließen. Soll dagegen der Druck im Zylinderraum der Einheit erhöht werden, soll also die Kolbenstange und der Kolben der Einheit nach unten bewegt werden, so wird der hydraulische Druck in der Leitung erhöht. Über eine Zweigleitung wird Hydraulikflüssigkeit mit demselben Druck in die Kammer gedrückt, wodurch der Steuerkolben nach links gerückt wird in der Weise, daß der Kolbensitz geöffnet wird und eine hydraulische Verbindung hergestellt wird zwischen dem Zylinderraum der Einheit, einer Öffnung im Ventilgehäuse und einer weiteren Leitung, so daß das hydraulische Medium in den Pumpensumpf zurückfließen kann. Mit welcher Funktion die vorbekannte Kolben-Zylinder-Einheit belegt ist, wurde hierbei offengelassen. Der Einsatz als Anstellzylinder in Stützsystemen für den gegossenen Strang in einer Brammengießanlage ist nicht angesprochen.

Die Aufgabe der vorliegenden Erfindung besteht darin, ein selbstumschaltendes Sicherungsventil gegen Leckagen oder Druckabfall in Hydrauliksystemen, insbesondere für die die Führungselemente abstützenden Hydraulikzylinder von Stranggießanlagen zu schaffen, welches die statische Betriebssicherheit der Stranggießanlage bei dem jeweils wirksamen Betriebsdruck der Hydraulikzylinder gewährleistet.

Diese Aufgabe wird mit den technischen Merkmalen des Anspruchs 1 gelöst durch einen in dem Ventilgehäuse axial angeordneten Schließkolben, der die Zulauf- und Ablaufbohrung für das hydraulische Medium im Gehäuse steuert und durch wenigstens einen im Ventilgehäuse zum Schließkolben mit Abstand und zur Schließkolbenachse fluchtend angeordneten auf wenigstens zwei Druckpunkte P1, P2 einstellbaren Schaltkolben, wobei zwischen Schließkolben und Schaltkolben federelastische Bauelemente angeordnet sind und wobei die Ablaufbohrung im Ventilgehäuse und diejenige Fläche des Schaltkolbens, die der der Federabstützung dienenden Schaltkolbenfläche gegenüberliegt, in hydraulischer Verbindung stehen. Durch diese Maßnahmen wird die Betriebssicherheit von Hydrauliksystemen der gattungsgemäßen Bauart wesentlich erhöht. Mit dieser überzeugend einfachen Konstruktion werden elektrohydraulische Schaltsysteme entbehrlich, die stets einen höheren technischen Aufwand mit zusätzlichen Störquellen bedeuten. Ferner wird mit Vorteil ein kompakt bauendes Sicherungsventil geschaffen, welches kaum größer als bisher übliche, nur einen Druckpunkt berücksichtigende Sicherungsventile ist. Die hydraulische Verbindung der Ablaufbohrung im Ventilgehäuse mit der entsprechenden Fläche des Schaltkolbens ermöglicht das selbsttätige Umschalten des Sicherungsventils bspw. vom niedrigeren auf den höheren hydraulischen Druckpunkt.

Dagegen kann das selbsttätige Umschalten des Sicherungsventils vom höheren zum niedrigeren Druckpunkt mechanisch erfolgen und zwar zusätzlich mit Hilfe der äußeren Schraubenfeder des Zweifedersystems.

Die kompakte Bauweise des Sicherungsventils wird im Sinne der Erfindung ferner dadurch erreicht, daß die federelastischen Bauelemente aus zwei ineinander angeordneten schraubenförmigen Federn bestehen, deren eine Abstützung der Schaltkolben bildet und deren andere Abstützung einerseits am Schließkolben und andererseits am Ventilgehäuse erfolgt.

Eine weitere vorteilhafte Ausbildung im Hinblick auf eine kompakte und funktionssichere Konstruktion ergibt sich durch eine innere in Schließrichtung des Ventilschaftes zwischen Schließkolben und Schaltkolben vorgespannte Meßfeder und eine äußere zwischen Gehäuse und Schaltkolben vorgespannte als Rückstellfeder für den Schaltkolben wirkende Schraubenfeder. Der kleinere wirksame Betriebsdruck hebt den Ventilschaft vom Ventilsitz gegen die kleinere Federkraft der Meßfeder, während der höhere Betriebsdruck gegen die höhere Federkraft der Meßfeder wirkt und ebenfalls dabei den Ventilkegel vom Ventilsitz abhebt. Kommt es zu einer Funktionsstörung im Hydrauliksystem, wird das Sicherungsventil sowohl bei dem kleineren Betriebsdruck als auch bei dem größeren Betriebsdruck den erforderlichen hydraulischen Druck in den Anstellzylindern der Führungselemente halten, indem die jeweilige wirksame Federkraft den Ventilkegel in den Ventilsitz bewegt und dort kraftschlüssig arretiert.

Um das vom Betriebsdruck des Hydrauliksystems bewirkte Abheben des Schließkolbens vom Ventilsitz kräftemäßig zu unterstützen, wird in Weiterbildung der Erfindung vorgeschlagen, die Zulaufbohrung im Ventilgehäuse und die dem Ventilschaft zugewandte Fläche des Dichtungskolbens hydraulisch in Verbindung zu bringen. Die hervorgerufene hydraulische Unterstützung zum Öffnen des Sicherungsventils ist gleichermaßen bei dem niedrigeren Betriebsdruck und bei dem höheren Betriebsdruck wirksam.

Die Erfindung wird anhand von schematischen Zeichnungen, insbesondere für das selbstumschaltende Sicherungsventil näher erläutert. Es zeigen:
- Figur 1: eine Brammen-Stranggießanlage mit den wesentlichen Maschinen und Aggregaten, und
- Figur 2: das Sicherungsventil innerhalb des Hydrauliksystems für die den Strangguß stützenden Führungselemente.

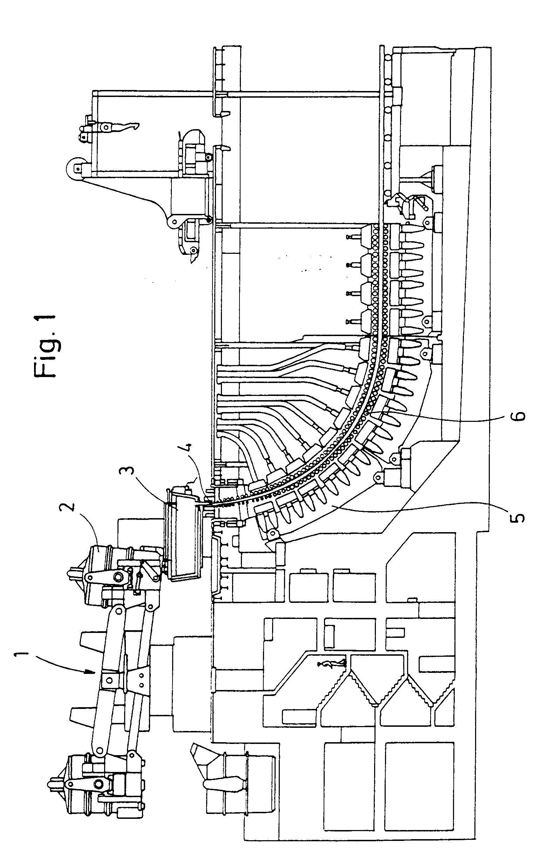

Figur 1 zeigt schematisch eine Stranggußanlage zur Herstellung von Brammen. Der schmelzflüssige Stahl wird aus der von einer Gießmaschine 1 transportierten Gießpfanne 2 und dem Zwischenbehälter 3 in die Kokille 4 geleitet, wo der Strang die gewünschte Form erhält. In der Strangführung 5 unterhalb der Kokille 4 erstarrt der Strang in einem Strangkühlsystem. Die Strangführung Zeigt eine enge Rollenteilung und mehrfach geteilte Stützrollen 6. Die Strangführung ist stufenlos einstellbar. Eine Hydraulik-Rohrbruchsicherung ist in der gesamten Strangführung vorgesehen.

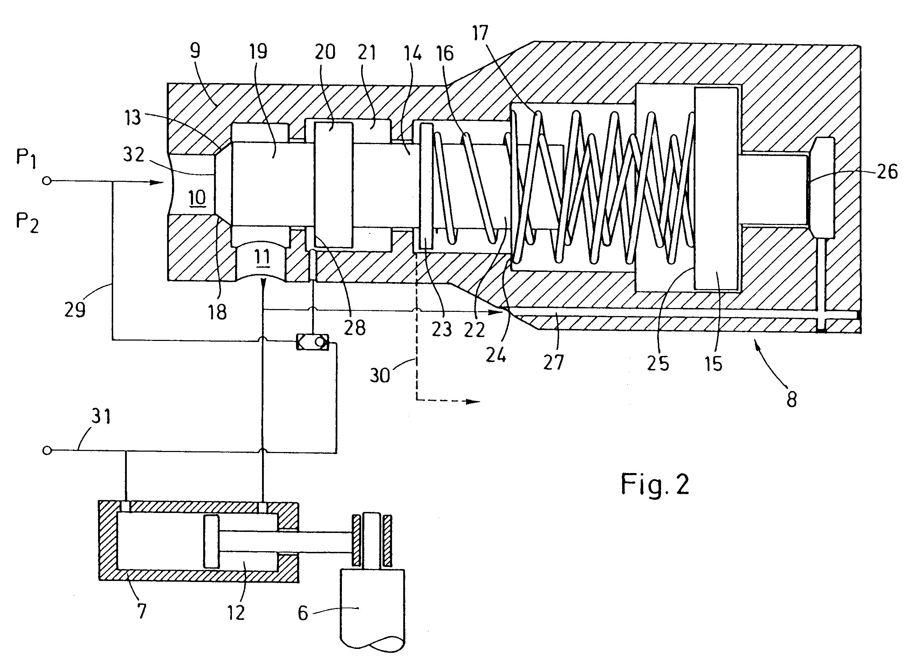

Um eine einwandfreie Strangqualität im Bereich der Strangführung zu erhalten, müssen die Stützrollen gegen Distanzstücke gehalten werden mit einer Mindestkraft, die größer ist als der ferrostatische Druck des Gießstranges. Dies erfolgt mit Hydraulikzylindern 7 (Fig. 2), deren Kolben auf die Lagerung der Stützrollen 6 einwirken. Die Hydraulikzylinder werden von einem nicht näher dargestellten Hydrauliksystem mit dem entsprechenden Betriebsdruck beaufschlagt. Für das Aangießen, für Verbundguß, d.h. für das Angießen des neuen an den alten Strang und für das Ausfördern des Strangendes wird ein niedrigerer Betriebsdr uck erforderlich; für den normalen Gießbetrieb dagegen der höhere Betriebssdruck. Dementsprechend müssen die anstellbaren Hydraulikzylinder der Führungselemente mit zwei Betriebsdrücken arbeiten und in der Lage sein, die Führungselemente in Position zu halten, falls es zu Lackage oder Druckabfall im Hydrauliksystem während des Gießbetriebes kommt.

Fig. 2 zeigt das erfindungsgemäße Sicherungsventil, welches dazu bestimmt ist, die in Brammen-Stranggießanlagen zur Strangführung eingesetzten mit zwei Betriebsrücken arbeitenden Hydraulikzylinder trotz Störungen im Hydrauliksystem in ihrer Position zu halten. Das Sicherungsventil 8 besteht aus einem Ventilgehäuse 9 mit einer Zulaufbohrung 10 und einer Ablaufbohrung 11 für das hydraulische Medium. Die Zulaufbohrung des Ventils steht mit dem Hydrauliksystem in Verbindung; die Ablaufbohrung steht mit der Druckseite 12 des Hydraulikzylinders 7 für die Führungselemente des gegossenen Strangs in Verbindung (Fig. 1). In dem Ventilgehäuse 9 sind ein Schließkolben 14 und ein Schaltkolben 15 angeordnet, zwischen die eine elastische Federanordnung eingepaßt ist. Die Federanordnung besteht aus zwei koaxial zueinander angeordneten Schraubenfedern 16, 17. Die Achse des Schließkolbens 14, die Achse der Federanordnung 16, 17 und die Achse des Schaltkolbens 15 sind in dem Ventilgehäuse 9 fluchtend zueinander ausgerichtet. Der Schließkolben 14 hat in seinem vorderen Bereich einen Ventilkegel 18, der in den entsprechend ausgebildeten Ventilsitz 13 der Zulaufbohrung 10 eingepaßt ist. An den Ventilkegel schließt sich der Ventilschaft 19 an sowie ein Steuerkolben 20 in dem zugehörigen Zylinder 21.

Auf dem Kolbenschaft 22, der durch den zugehörigen Zylinder 21 hindurchgeführt ist, befindet sich ein Abstützring 23 für die Meßfeder 16, die sich dort abstützt und von dem verlängerten Kolbenschaft 22 zum Teil geführt wird. Diese innere schraubenförmige Meßfeder 16 wirkt auf den Schließkolben 14 in Schließrichtung und ist hierzu, dem Stützring 23 gegenüberliegend, an dem Schaltkolben 15 abgestützt. Die die Meßfeder 16 umgebende Schraubenfeder 17 ist ebenfalls an dem Schaltkolben 15 abgestützt und findet die zweite Abstützung an einer ringförmigen Abstützfläche 24 des Ventilgehäuses 9. An dem der Zulaufbohrung 10 axial gegenüberliegenden Ende des Ventilgehäuses 9 ist der Schaltkolben 15 angeordnet. Die der Federabstützfläche 25 gegenüberliegende Schaltkolbenfläche 26 steht mittels einer Verbindungsleitung 27, bspw. mittels einer im Ventilgehäuse 9 verlaufenden Verbindungsbohrung, mit der Ablaufbohrung 11 in offener hydraulischer Verbindung. Die Zulaufbohrung 10 im Ventilgehäuse 9 und die dem Ventilschaft 19 zugewandte Fläche 28 des Steuerkolbens 20 sind mittels der Druckleitung 29 miteinander hydraulisch verbunden bspw. durch eine im Ventilgehäuse 9 verlaufende Verbindungsbohrung. Mit 30 ist eine Leckageleitung für das Sicherungssystem im Ventilgehäuse 9 bezeichnet und mit 31 eine Druckleitung zum Verstellen der Kolbenposition im Hydraulikzylinder 7.

Fig. 2 zeigt das Sicherungsventil in geschlossenem Zustand, bei welchem der Betriebsdruck im Hydraulikzylinder 7 trotz einer Störung im Hydrauliksystem gehalten wird. Arbeitet das Hydrauliksystem fehlerfrei, ist das Ventil normalerweise geöffnet, wobei der auf die Ventilfläche 32 wirkende Druck P1 - das ist der niedrigere Betriebsdruck - den Schließkolben 14 gegen die Federkraft der Meßfeder 16 vom Ventilsitz 13 abhebt und soweit zurückdrückt, daß die Zulaufbohrung 10 und die Ablaufbohrung 11 für das hydraulische Medium in offener Verbindung stehen und von daher der Druck P1 der Anlage an der Druckseite 12 des Hydraulikzylinders 7 ansteht. Um den Schließkolben leichter vom Ventilsitz und gegen die Meßfeder 16 abheben zu können, wird zusätzlich die Fläche 28 des Steuerkolbens 20 mittels der Verbindungsbohrung bzw. der Druckleitung 29 mit dem Druck P1 beaufschlagt. Bei der Betriebsart mit dem höheren Betriebsdruck P2 wirkt wegen der offenen hydraulischen Verbindung von Ablaufbohrung 11 und Kolbenfläche 26 des Schaltkolbens 15 eine Verstellung des Schaltkolbens in Richtung auf den Schließkolben 14 derart, daß die Meßfeder 16 und die Schraubenfeder 17 auf eine höhere Kraft vorgespannt werden. Kommt es nun auf dem höheren Druckniveau P2 zu einer Störung im Hydrauliksystem mit einem Druckabfall, wird der Schließkolben 14 von der stärkeren Federkraft der vorgespannten Feder 16, die in Schließrichtung wirkt, gegen den Ventilsitz 13 gedrückt. Das defekte Hydrauliksystem ist auf diese Weise abgesichert und an dem Hydraulikzylinder 7 kann der ursprünglich hohe Druck P2 gehalten werden.

Arbeitet das Hydrauliksystem auf dem höheren Druckniveau P2 fehlerfrei und wird auf das niedrigere Druckniveau P1 umgeschaltet, steht an der Kolbenfläche 26 des Schaltkolbens 15 wegen der offenen Verbindung zur Ablaufbohrung 11 verzögerungsfrei der niedrigere Druck P1 an, mit der Folge, daß der Schaltkolben 15 sofort von der Federanordnung 16, 17 in die zum Schließkolben abstandsfernere Position zurückgedrückt wird. Die Feder 17 wirkt im Falle der Druckumschaltung als Rückstellfeder für den Schaltkolben 15. In dieser Position des Schaltkolbens 15 braucht der niedrigere Betriebsdruck P1 des Hydrauliksystems den Schließkolben 14 nur noch gegen die geringere Federkraft der Schließfeder 16 offenzuhalten. Kommt es auf diesem niedrigen Druckniveau zu einer Störung im Hydrauliksystem z.B. durch Druckabfall, wird der Schließkolben - wie zuvor beschrieben - von der Schließfeder 16 auf den Ventilsitz gedrückt, so daß der niedrigere Betriebsdruck P1 an dem Hydraulikzylinder 7 gehalten wird.

Der Gegenstand der Erfindung ist nicht auf das Ausführungsbeispiel allein beschränkt, sondern umfaßt auch solche weiteren Ausbildungen, die den beanspruchten Maßnahmen genügen.

### Bezugszeichenübersicht

- 1: Gießmaschine
- 2: Gießpfanne
- 3: Zwischenbehälter
- 4: Kokille
- 5: Strangführung
- 6: Stützrolle
- 7: Hydraulikzylinder
- 8: Sicherungsventil
- 9: Ventilgehäuse
- 10: Zulaufbohrung
- 11: Ablaufbohrung
- 12: Druckseite des Hydraulikzylinders
- 13: Ventilsitz
- 14: Schließkolben
- 15: Schaltkolben
- 16, 17: Schraubenfedern
- 18: Ventilkegel
- 19: Ventilschaft
- 20: Steuerkolben
- 21: Zylinder des Steuerkolbens
- 22: Kolbenschaft
- 23: Abstützring
- 24: Abstützfläche
- 25: Federabstützfläche
- 26: Schaltkolbenfläche
- 27: Verbindungsleitung
- 28: Fläche des Steuerkolbens
- 29: Druckleitung
- 30: Leckageleitung
- 31: Druckleitung
- 32: Ventilfläche

## Patentansprüche

1. Sicherungsventil gegen Leckagen oder Druckabfall in Druckleitungen oder in mit Druck beaufschlagten Bauelementen von Hydrauliksystem, insbesondere Rohrbruchsicherungsventil für hydraulisch wirkende, die Stütz- und Führungselemente (5, 6) wie Führungsrollen, Treibrollen oder deren Rollensegmente von im Strangguß hergestellten Metallbrammen, Metallbändern oder Metallprofilen abstützende oder anstellende Kolben-Zylinder-Einheiten, wobei das Sicherungsventil (8) mit einem auf wenigstens zwei unterschiedliche Betriebsdrücke selbst umschaltenden Sicherungssystem ausgerüstet ist,
**gekennzeichnet durch**
einen in dem Ventilgehäuse (9) axial angeordneten Schließkolben (14), der die Zulauf- und Ablaufbohrung (10, 11) für das hydraulische Medium im Gehäuse steuert und durch wenigstens einen im Ventilgehäuse (9) zum Schließkolben (14) mit Abstand und zur Schließkolbenachse fluchtend angeordneten auf wenigstens zwei Druckpunkte (P1, P2) einstellbaren Schaltkolben (15), wobei zwischen Schließkolben (14) und Schaltkolben (15) federelastische Bauelemente (16, 17) angeordnet sind und wobei die Ablaufbohrung (11) im Ventilgehäuse (9) und diejenige Fläche (26) des Schaltkolbens (15), die der der Federabstützung dienenden Schaltkolbenfläche (25) gegenüberliegt, in hydraulischer Verbindung stehen.

2. Sicherungsventil nach Anspruch 1,
**dadurch gekennzeichnet**,
daß die federelastischen Bauelemente aus zwei ineinander angeordneten schraubenförmigen Federn (16, 17) bestehen, deren eine Abstützung der Schaltkolben (15) bildet und deren andere Abstützung einerseits am Schließkolben (14) und andererseits am Ventilgehäuse (9, 24) erfolgt.

3. Sicherungsventil nach Anspruch 1 oder 2,
**dadurch gekennzeichnet**,
daß zwischen dem Ventilschaft (19) des Schließkolbens (14) und dem umschaltbaren Sicherungssystem im Ventilgehäuse (9) ein Steuerkolben (20) in einem zugehörigen Zylinder (21) und ein die Federkraft übertragender Abstützring (23) angeordnet sind.

4. Sicherungsventil nach mindestens einem der Ansprüche 1 bis 3,
**dadurch gekennzeichnet**,
daß die Zulaufbohrung (10) im Ventilgehäuse (9) und die dem Ventilschaft (19) zugewandte Fläche (28) des Steuerkolbens (20) hydraulisch in Verbindung stehen.

5. Sicherungsventil nach mindestens einem der vorhergehenden Ansprüche 1 bis 4,
**gekennzeichnet durch**
eine innere in Schließrichtung des Ventilschafts (19) zwischen Schließkolben (14) und Schaltkolben (15) vorgespannte Meßfeder (16) und eine äußere zwischen Ventilgehäuse (9, 23) und Schaltkolben (15) vorgespannte als Rückstellfeder für den Schaltkolben (15) wirkende Schraubenfeder (17).

6. Sicherungsventil nach mindestens einem der vorhergehenden Ansprüche,
**dadurch gekennzeichnet**,
daß der Schließkolben (14) mit Ventilschaft (19), mit Steuerkolben (20) und Abstützring (23) sowie die elastische Federanordnung (16, 17) und der Schaltkolben (15) von dem Ventilgehäuse (9) zu einer Baueinheit umschlossen sind.

## Claims

1. Safety valve against leakages or pressure drop in pressure ducts or in components, which are loaded with pressure, of hydraulic systems, especially pipe rupture safety valve for hydraulically operating piston-cylinder units supporting or adjusting the support and guide elements (5, 6), such as guide rollers, drive rollers or roller segments thereof, of metal slabs, metal strips or metal sections produced in continuous casting, wherein the safety valve (8) is equipped with a safety system automatically switching over to the lesser of two different operating pressures, characterised by a closing piston (14) which is axially arranged in the valve housing (9) and controls the inflow bore and outflow bore (10, 11) for the hydraulic medium in the housing and by at least one switching piston (15) which is arranged in the valve housing (9) at a spacing (9) from the closing piston (14) and in alignment with the closing piston axis and which is settable to at least two pressure points (P1, P2), wherein resilient components (16, 17) are arranged between closing piston (14) and switching piston (15) and wherein the outflow bore (11) in the valve housing (9) and that surface (26) of the switching piston (15), which lies opposite the switching piston surface (25) serving for the spring support, stand in hydraulic connection.

2. Safety valve according to claim 1, characterised thereby that the resilient components consist of two helical springs (16, 17) which are arranged one in the other and the one support of which is formed by the switching piston (15) while the other support of which takes place on the one hand at the closing piston (14) and on the other hand at the valve housing (9, 24).

3. Safety valve according to claim 1 or 2, characterised thereby that arranged between the valve stem (19) of the closing piston (14) and the switchable safety system in the valve housing (9) are a control piston (20) in an associated cylinder (21) and a support ring (23) transmitting the spring force.

4. Safety valve according to at least one of claims 1 to 3, characterised thereby that the inflow bore (10) in the valve housing (9) and the surface (28), which faces the valve stem (19), of the control piston (20) stand in connection hydraulically.

5. Safety valve according to at least one of the preceding claims 1 to 4, characterised by an inner measuring spring (16) biassed in closing direction of the valve stem (19) between closing piston (14) and switching piston (15) and an outer helical spring (17) biassed between valve housing (9, 23) and switching piston (15) and acting as restoring spring for the switching piston (15).

6. Safety valve according to at least one of the preceding claims, characterised thereby that the closing piston (14) together with valve stem (19), control piston (20) and support ring (23) as well as the resilient spring arrangement (16, 17) and the switching piston (15) are enclosed by the valve housing (9) to form a constructional unit.

## Revendications

1. Soupape de sécurité contre des fuites ou une chute de pression dans des conduites sous pression ou dans des pièces soumises à la pression d'un système hydraulique, en particulier une soupape de sécurité contre les ruptures de conduites pour des unités à cylindre et à piston fonctionnant de manière hydraulique, supportant ou réglant les éléments de support et de guidage (5, 6), tels que des rouleaux de guidage, des rouleaux d'entraînement ou leurs segments, de brames métalliques, de feuillards métalliques ou de profils métalliques fabriqués par coulée continue, la soupape de sécurité (8) étant équipée d'un système de sécurité s'inversant automatiquement entre au moins deux pressions de fonctionnement différentes, caractérisée par un piston de fermeture (14) disposé axialement dans le bâti (9) de la soupape et commandant l'ouverture d'alimentation et d'évacuation (10, 11) de l'agent hydraulique dans le bâti et par au moins un piston d'inversion (15) disposé dans le bâti (9) de la soupape, à une certaine distance du piston de fermeture (14) et aligné par rapport à l'axe du piston de fermeture, pouvant être réglé à au moins deux valeurs de pression (P1, P2), des éléments (16, 17) élastiques à ressort étant disposés entre le piston de fermeture (14) et le piston d'inversion (15) et l'ouverture d'évacuation (11) dans le bâti (9) de la soupape et la surface (26) du piston d'inversion (15) opposée à la surface (25) du piston d'inversion servant d'appui au ressort étant reliés de manière hydraulique.

2. Soupape de sécurité selon la revendication 1, caractérisée en ce que les éléments élastiques à ressort sont constitués par deux ressorts (16, 17) en forme de vis disposés l'un dans l'autre, dont un appui est formé par le piston d'inversion (15) et L'autre appui est réalisé d'une part sur le piston de fermeture (14) et d'autre part sur le bâti (9, 24) de la soupape.

3. Soupape de sécurité selon la revendication 1 ou 2, caractérisée an ce qu'on a disposé, entre la tige (19) de la soupape du piston de fermeture (14) et le système de sécurité pouvant s'inverser dans le bâti (9) de la soupape, un piston de commande (20) dans un cylindre (21) correspondant et un anneau d'appui (23) transmettant la force du ressort.

4. Soupape de sécurité selon au moins une quelconque des revendications 1 à 3, caractérisée en ce que l'ouverture d'alimentation (10) dans le bâti (9) de la soupape et la surface (28) du piston de commande (20) faisant face à la tige (19) de la soupape sont reliés hydrauliquement.

5. Soupape de sécurité selon au moins une quelconque des revendications 1 à 4 ci-dessus, caractérisée par un ressort de mesure (16) intérieur précontraint entre le piston de fermeture (14) et le piston d'inversion (15) dans le sens de fermeture de la tige (19) de la soupape et par un ressort (17) à vis extérieur précontraint entre le bâti de la soupape (9, 23) et le piston (15) de fermeture comme ressort de rappel pour le piston d'inversion (15).

6. Soupape de sécurité selon au moins une quelconque des revendications ci-dessus, caractérisée en ce que le piston de fermeture (14) avec la tige de soupape (19), le piston de commande (20) et l'anneau d'appui (23) ainsi que le dispositif à ressort (16, 17) élastique et le piston d'inversion (15) sont entourés par le bâti (9) de la soupape de manière à former une unité.
